Europäisches Patentamt

European Patent Office

Office européen des brevets

(19)

(11) Numéro de publication : **0 453 411 A1**

# (12) DEMANDE DE BREVET EUROPEEN

(21) Numéro de dépôt : **91810295.5**

(51) Int. Cl.⁵ : **B23B 13/02**

(22) Date de dépôt : **19.04.91**

(30) Priorité : **19.04.90 FR 9005174**

(43) Date de publication de la demande :
**23.10.91 Bulletin 91/43**

(84) Etats contractants désignés :
**AT CH DE ES FR GB IT LI NL SE**

(71) Demandeur : **Botteron, Jean-Daniel
CH-2518 Nods (CH)**

(72) Inventeur : **Botteron, Jean-Daniel
CH-2518 Nods (CH)**

(74) Mandataire : **Nithardt, Roland
CABINET ROLAND NITHARDT Y-PARC Ch. de
la Sallaz C.P. 3347
CH-1400 YVERDON-LES-BAINS (CH)**

(54) **Dispositif pour faire avancer une barre de matière première sur un tour d'usinage.**

(57)    Le dispositif comporte un élément tubulaire de guidage dans lequel est placée la barre, des moyens pour pousser cette barre dans cet élément et des moyens pour la faire avancer d'une manière rapide et précise en direction des outils de tournage. L'élément tubulaire (12) ayant un diamètre intérieur légèrement supérieur à celui de la barre (13) et une longueur supérieure à celle de cette barre contient un piston (40), relié par un câble (41) à un enrouleur automatique (42), permettant de pousser la barre (13). Un capuchon étanche (19a) ferme l'élément (12) et comporte une tubulure d'injection (26) permettant l'injection d'un liquide sous pression à l'arrière de la barre pour la faire avancer. Un piston (31) logé à l'intérieur d'un vérin (32) permet par l'intermédiaire d'une tige (30) de commander l'ouverture et la fermeture du capuchon (19a)

EP 0 453 411 A1

FIG. IB

La présente invention concerne un dispositif pour faire avancer une barre de matière première sur un tour d'usinage comportant au moins un élément tubulaire de guidage de cette barre, ayant un diamètre intérieur légèrement supérieur à celui de la barre et une longueur supérieure à celle de cette barre, et des moyens pour injecter un liquide sous pression à l'arrière de la barre dans ledit élément tubulaire de guidage pour faire avancer une barre de matière première sur un tour d'usinage.

Les systèmes les plus courants pour provoquer l'avance d'une barre de matière première sur un tour d'usinage comportent des mécanismes à pinces commandés et guidés, qui sont compliqués, lourds et encombrants. Il existe également des dispositifs dans lesquels l'avance de la barre est réalisée par injection de liquide dans un tube de guidage, tels que par exemple celui décrit dans la demande de brevet européen publiée sous le N° 0121638. Ces systèmes présentent l'inconvénient de ne pas permettre de contrôler l'avance de la barre d'une manière très précise. En outre, l'évacuation du liquide de poussée est compliquée et souvent incomplète dans le tube de guidage.

La présente invention se propose de pallier ces inconvénients en réalisant un dispositif simple et efficace qui permet de faire avancer une barre de matière première avec des moyens simples à gérer, et de contrôler cette avance de manière précise.

Ce but est atteint par le dispositif selon l'invention, caractérisé en ce que l'élément tubulaire de guidage contient un piston agencé pour pousser la barre de matière première dans cet élément.

Selon une forme de réalisation préférée, ce piston est relié par un câble à un enrouleur, ledit enrouleur étant automatique et le dispositif comportant un détecteur de fin de course pour commander le rappel du piston

De préférence l'enrouleur automatique est associé à un moteur-réducteur.

D'une façon avantageuse, les moyens pour injecter un liquide sous pression comportent une tubulure d'injection couplée à l'élément tubulaire de guidage et ladite tubulure d'injection peut être montée sur un capuchon de fermeture étanche de l'élément tubulaire de guidage.

Selon une forme de réalisation particulièrement avantageuse, la tubulure d'injection et le capuchon de fermeture étanche sont portés par un mécanisme de commande de l'ouverture et de la fermeture de l'élément tubulaire de guidage.

Ledit mécanisme de commande peut comporter un piston dont la tige comporte une rainure dans laquelle est engagée une goupille fixe.

Dans cette forme de réalisation, ladite rainure comporte un tronçon rectiligne axial et un tronçon hélicoïdal, de telle manière que le capuchon soit déplacé selon un mouvement de translation suivi d'un mouvement combiné de translation et de rotation.

Dans cette forme de dispositif, le liquide sous pression est un mélange d'eau et d'huile de coupe prélevé dans le réservoir du liquide d'arrosage des outils d'usinage.

De préférence, le liquide sous pression est prélevé sur un circuit indépendant du circuit d'arrosage des outils d'usinage et de la pièce usinée.

Pour récupérer le liquide sous pression lors de l'ouverture de l'élément tubulaire de guidage, le dispositif comporte un bac de récupération du liquide sous pression disposé sous le capuchon de fermeture étanche de l'élément tubulaire de guidage.

Ledit élément tubulaire de guidage peut être entraîné en rotation et, dans ce cas, est logé à l'intérieur d'une chemise extérieure tubulaire montée sur des paliers radiaux à billes.

La présente invention sera mieux comprise en référence à la description d'un exemple de réalisation et du dessin annexé dans lequel :

les figures 1A et 1B représentent des vues en coupe longitudinale illustrant deux formes de réalisation du dispositif selon l'invention couplé à un tour d'usinage représenté schématiquement,

la figure 2 représente une vue arrière illustrant plus en détail le déplacement du capuchon de fermeture de l'élément tubulaire de guidage, et

la figure 3 représente une vue partielle d'une partie du dispositif correspondant à la figure 1B.

En référence aux figures, le dispositif 10 pour faire avancer une barre de matière première, qui est de préférence une barre métallique de section circulaire ou polygonale, est associé à un tour d'usinage 11. Il est monté sur un bâti 9 comportant un coffret de commande 8. Le dispositif 10, couramment appelé dispositif d'amenée de la barre se compose essentiellement d'un élément tubulaire de guidage 12 dont le diamètre intérieur est légèrement supérieur au diamètre extérieur de la barre métallique 13 de matière à usiner.

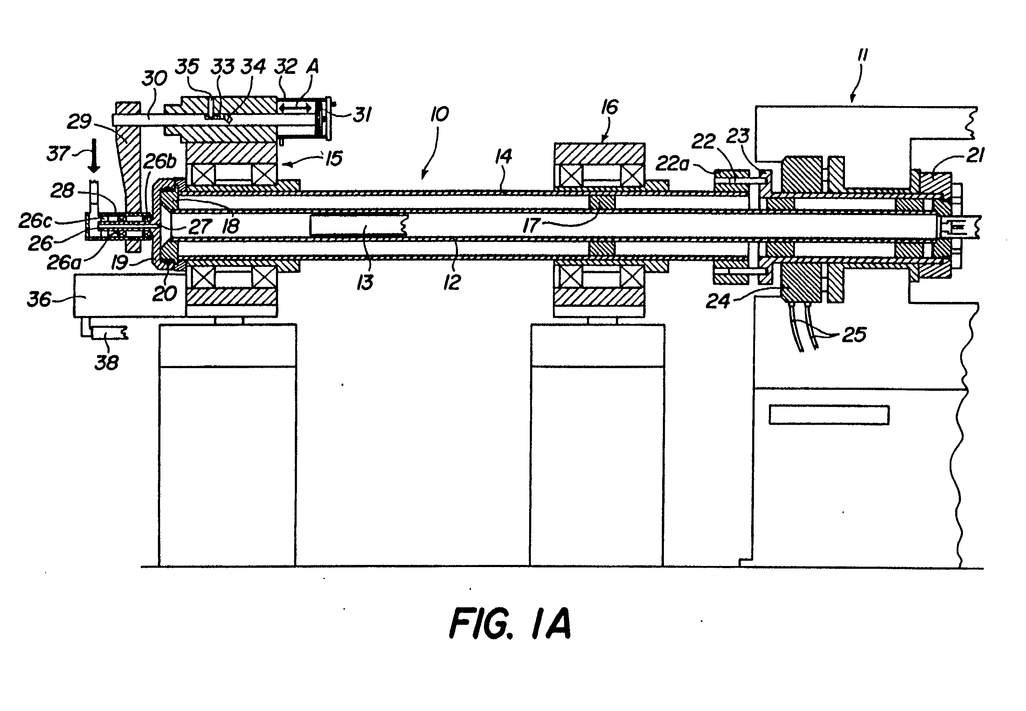

Dans la réalisation représentée par la figure 1A, l'élément tubulaire de guidage 12 est logé à l'intérieur d'une chemise extérieure tubulaire 14 qui est rotative et, à cet effet, montée sur des paliers radiaux à billes 15 et 16. L'élément tubulaire de guidage 12 est interchangeable et a une fonction de tube de réduction qui peut être changé en fonction du diamètre de la barre à usiner. Le centrage de l'élément tubulaire de guidage 12 à l'intérieur de la chemise extérieure 14 s'effectue au moyen de bagues de centrage 17 et d'une bague 18 qui est couplée à un capuchon 19 de fermeture de l'élément tubulaire de guidage au moyen d'un joint annulaire 20 qui assure l'étanchéité entre ladite bague et ledit capuchon, à l'extrémité de la chemise extérieure tubulaire 14.

Le dispositif 10 est couplé au mandrin tournant 21 du tour 11 par l'intermédiaire de goupilles 22 fixées sur un tirant 23 du tour 11 et coulissant axialement dans des alésages appropriés ménagés dans une bague amovible 22a montée sur la chemise extérieure 14. Dans l'exemple représenté, le serrage du mandrin s'effectue au moyen de vérins hydrauliques 24 alimentés par des conduits 25.

Pour faire avancer la barre à l'intérieur de l'élément tubulaire de guidage 12, on injecte, à travers une tubulure d'injection 26 débouchant dans une ouverture centrale 27 du capuchon 19, un liquide sous pression, qui peut être le liquide de coupe, habituellement constitué d'un mélange d'eau et d'huile de coupe, prélevé sur le circuit adapté pour amener ce mélange vers les outils d'usinage et la pièce en cours de travail. La pression qu'exerce ce liquide sur l'extrémité de la barre fait avancer cette dernière à l'intérieur de l'élément tubulaire de guidage. La tubulure d'injection 26 est logée à l'intérieur d'une pièce 28 portée par un bras 29 monté à l'extrémité d'une tige 30 d'un piston 31 qui constitue l'organe d'actionnement du mécanisme de commande de l'ouverture et de la fermeture de l'élément tubulaire de guidage 12. Le piston 31 est logé à l'intérieur d'un vérin 32 à double effet qui peut se déplacer dans le sens de la double flèche A. La tige 30 est pourvue d'une rainure comportant un tronçon rectiligne axial 33 et un tronçon hélicoïdal 34 ménagé dans le prolongement du tronçon rectiligne 33. Une goupille fixe 35 est engagée dans cette rainure de telle manière que lorsque le piston se déplace de la droite vers la gauche sur la fig. 1A, le bras 29, et par conséquent le capuchon 19 qui lui est lié, se déplacent tout d'abord de la droite vers la gauche selon un mouvement de translation correspondant à la longueur du tronçon de rainure rectiligne 33 puis selon un mouvement combiné de translation et de rotation correspondant à la longueur du tronçon de rainure hélicoïdale 34. Ce déplacement permet d'ouvrir le capuchon en vue de mettre une nouvelle barre de matière à usiner en place dans l'élément tubulaire de guidage 12 ou de remplacer cet élément lorsque l'on veut usiner une barre de dimension différente de celle qui a été usinée précédemment. La fermeture s'effectue dans le sens opposé de la même manière, c'est-à-dire la première partie du déplacement s'effectue selon un mouvement hélicoïdal et la dernière partie du déplacement s'effectue selon un mouvement de translation.

La tubulure d'injection 26 est montée à l'intérieur de la pièce 28 au moyen de roulements 26a et 26b, et un joint tournant 26c assure l'étanchéité entre la pièce 28 et la tubulure d'injection 26. On notera qu'en cours de travail, cette tubulure d'injection 26 solidaire du capuchon 19 lui-même monté sur la chemise extérieure tubulaire 14 est entraînée en rotation, alors que la pièce 28 est fixe.

Un bac de récupération 36 du liquide 37 injecté dans l'élément tubulaire de guidage est disposé sous le capuchon 19. Ce bac de récupération est connecté par un conduit 38 au circuit d'arrosage du liquide de coupe mentionné précédemment.

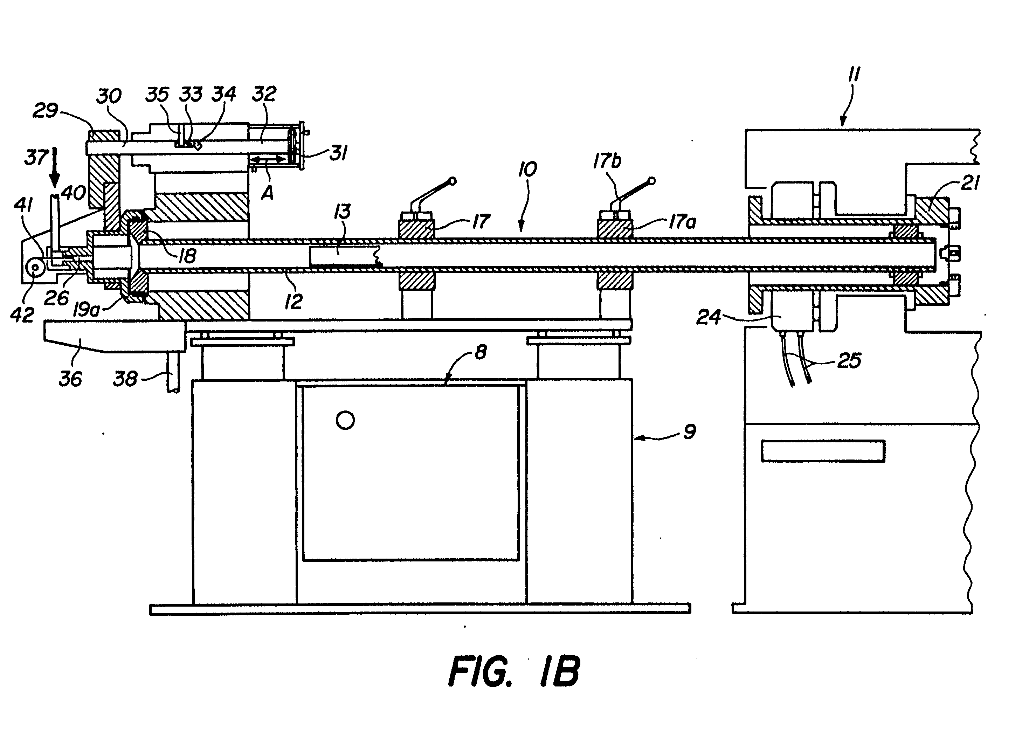

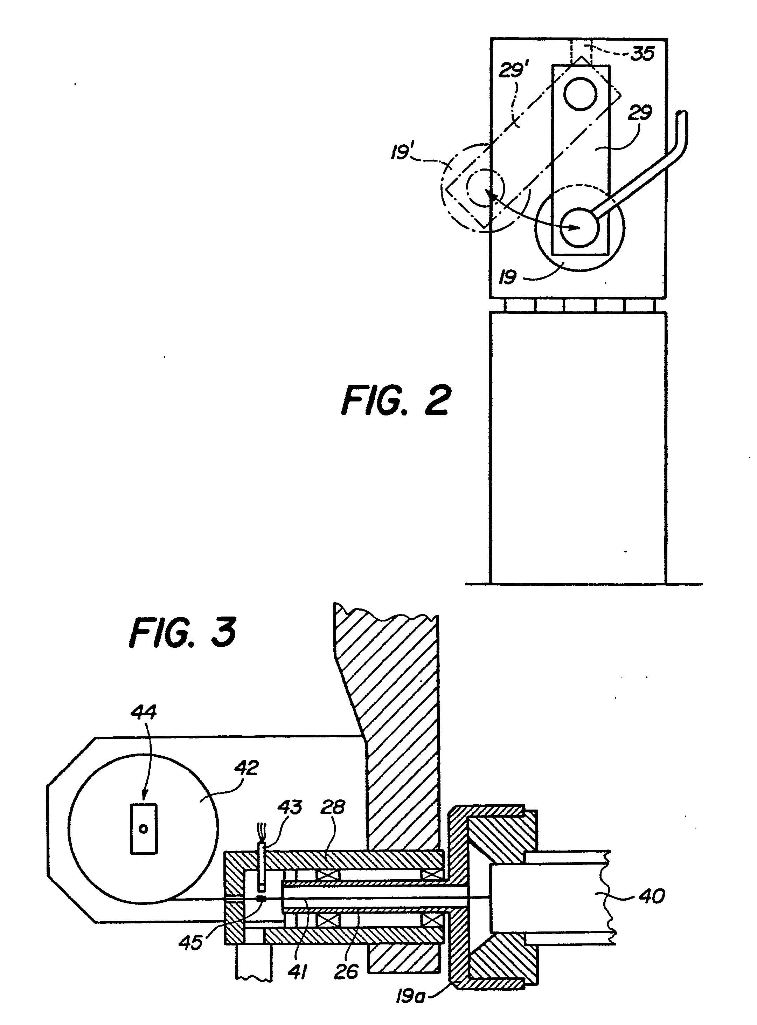

Dans la réalisation illustrée par la figure 1B, la chemise extérieure 14 et les paliers 15 et 16 ont été supprimés. Les bagues de centrage 17 ont été remplacées par des bagues de serrage 17a équipées de leviers 17b appropriés pour assurer un serrage rapide. Dans cette variante, la barre est poussée par un piston 40 couplé à un dispositif de mesure précise de l'avance de la barre, qui est représenté plus en détail par la figure 3. Le capuchon 19 de la réalisation représentée par la figure 1A, qui est tournant, est remplacé par un capuchon non rotatif 19a. Les roulements 26a et 26b ainsi que le joint tournant 26c ont été supprimés et la tubulure d'injection 26 est directement ménagée dans le capuchon 19a.

La fig. 2 représente d'une part la position de fermeture du capuchon 19, représentée en traits pleins, et d'autre part la position d'ouverture 19' représentée en traits interrompus. Ce capuchon est porté par le bras 29 dont la position d'ouverture 29' est également représentée en traits interrompus.

La figure 3 illustre une partie de la réalisation selon la figure 1B, qui permet notamment une avance plus efficace de la barre à l'intérieur de l'élément tubulaire de guidage 12 et surtout un contrôle efficace de l'avance de cette barre. La partie du dispositif représentée par la figure 3 s'adapte à l'extrémité des autres composants de ce dispositif qui restent inchangés. Dans cette réalisation, on a prévu un piston 40, dont le diamètre correspond au diamètre intérieur de l'élément tubulaire de guidage 12 et qui est destiné à pousser la barre de matière à usiner. Le piston 40 est relié, par un câble 41, à un enrouleur automatique 42 qui assure le retour du piston 40 dans sa position initiale, lorsque la matière à usiner a été entièrement repoussée vers la zone d'usinage, c'est-à-dire vers le mandrin tournant 21. Un détecteur de fin de course, par exemple du type capacitif 43, ou magnétique ou inductif etc., peut être monté sur la pièce 28. Un détecteur 44 incrémental ou optique etc. pourrait également être monté sur l'enrouleur et coopérer avec l'axe de ce dernier pour compter le nombre de tours que cet enrouleur fait pendant le déplacement de la barre. Le rappel du piston 40 est commandé automatiquement lorsqu'un nombre de tours prédéterminé de l'enrouleur est atteint ou lorsque le capteur magnétique (par exemple) détecte le passage d'un élément magnétique 45 solidaire du câble. Il s'effectue de préférence au moyen d'un moteur-réducteur ( non représenté ). La pompe ( non représentée ) d'injection du liquide sous pression est également arrêtée à ce moment. Le liquide sous pression est injecté dans la tubulure 26 à l'arrière de la pièce 28 et pénètre dans le capuchon 19a, pour repousser le piston 40 dans l'élément de guidage 12.

La présente invention n'est pas limitée aux formes de réalisation décrites mais peut subir différentes modifications et se présenter sous diverses variantes évidentes pour l'homme de l'art.

## Revendications

1. Dispositif pour faire avancer une barre de matière première sur un tour d'usinage comportant au moins un élément tubulaire de guidage (12) de cette barre, ayant un diamètre intérieur légèrement supérieur à celui de la barre ( 13 ) et une longueur supérieure à celle de cette barre, et des moyens pour injecter un liquide sous pression à l'arrière de la barre dans ledit élément tubulaire de guidage, caractérisé en ce que l'élément tubulaire de guidage (12) contient un piston (40) agencé pour pousser la barre (13) de matière première dans cet élément.

2. Dispositif selon la revendication 1, caractérisé en ce que le piston (40) est relié par un câble (41) à un enrouleur (42).

3. Dispositif selon la revendication 2, caractérisé en ce que l'enrouleur (42) est automatique et en ce que le dispositif comporte un détecteur de fin de course pour commander le rappel du piston.

4. Dispositif selon la revendication 3, caractérisé en ce que l'enrouleur automatique ( 42 ) est associé à un moteur-réducteur débrayable.

5. Dispositif selon la revendication 1, caractérisé en ce que les moyens pour injecter un liquide sous pression comportent une tubulure d'injection ( 26 ) couplée à l'élément tubulaire de guidage ( 12 ) .

6. Dispositif selon la revendication 5, caractérisé en ce que ladite tubulure d'injection (26) est montée sur un capuchon de fermeture étanche (19, 19a) de l'élément tubulaire de guidage (12).

7. Dispositif selon la revendication 6, caractérisé en ce que la tubulure d'injection ( 26 ) et le capuchon de fermeture étanche ( 19, 19a ) sont portés par un mécanisme de commande de l'ouverture et de la fermeture de l'élément tubulaire de guidage ( 12).

8. Dispositif selon la revendication 7, caractérisé en ce que ledit mécanisme de commande comporte un piston (31) dont la tige (30) comporte une rainure dans laquelle est engagée une goupille fixe (35).

9. Dispositif selon la revendication 8, caractérisé en ce que ladite rainure comporte un tronçon rectiligne axial (33) et un tronçon hélicoïdal ( 34 ), de telle manière que le capuchon ( 19 ) soit déplacé selon un mouvement de translation suivi d'un mouvement combiné de translation et de rotation.

10. Dispositif selon la revendication 1, caractérisé en ce que le liquide sous pression (37) est un mélange d'eau et d'huile de coupe prélevé dans le réservoir du liquide d'arrosage des outils d'usinage.

11. Dispositif selon la revendication 1, caractérisé en ce que le liquide sous pression (37) est prélevé sur un circuit indépendant du circuit d'arrosage des outils d'usinage et de la pièce usinée.

12. Dispositif selon la revendication 10, caractérisé en ce qu'il comporte un bac de récupération (36) disposé sous le capuchon de fermeture de l'élément tubulaire de guidage ( 12 ) .

13. Dispositif selon la revendication 1, caractérisé en ce que ledit élément tubulaire de guidage (12) est entraîné en rotation et, dans ce cas, est logé à l'intérieur d'une chemise extérieure tubulaire (14) montée sur des paliers radiaux à billes (15, 16).

FIG. IA

FIG. 1B

EP 0 453 411 A1

FIG. 2

FIG. 3

Office européen
des brevets

**RAPPORT DE RECHERCHE EUROPEENNE**

Numero de la demande

EP 91 81 0295

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | EP-A-0 121 638 (SAMECA)<br>* Page 13, lignes 15-20; figure 4B * | 1 | B 23 B 13/02 |
| X | GB-A-2 012 232 (HYDAIRA-COREAL AG)<br>* Page 3, lignes 96-110; figures 1,7 * | 1 | |

DOMAINES TECHNIQUES
RECHERCHES (Int. Cl.5)

B 23 B

Le présent rapport a été établi pour toutes les revendications

| Lieu de la recherche | Date d'achèvement de la recherche | Examinateur |
|---|---|---|
| LA HAYE | 09-07-1991 | RAMBAUD P.M.J. |